Europäisches Patentamt

European Patent Office

Office européen des brevets

(11) Numéro de publication: **0 152 315**
**A1**

# DEMANDE DE BREVET EUROPEEN

(21) Numéro de dépôt: **85400064.3**

(22) Date de dépôt: **15.01.85**

(51) Int. Cl.⁴: **H 01 Q 3/06**
**F 16 H 19/00, F 15 B 15/06**

(30) Priorité: **20.01.84 FR 8400921**

(43) Date de publication de la demande:
**21.08.85 Bulletin 85/34**

(84) Etats contractants désignés:
**DE GB IT**

(71) Demandeur: S.A.M.M.- Société d'Applications des
Machines Motrices
224, Quai de Stalingrad
F-92130 Issy-les-Moulineaux(FR)

(72) Inventeur: Devaud, Gérard
26 Rue St-Lambert
F-75015 Paris(FR)

(72) Inventeur: Libault de la Chevasnerie, Arnaud
33 Rue du Hameau
F-75015 Paris(FR)

(74) Mandataire Moncheny, Michel et al,
c/o Cabinet Lavoix 2 Place d'Estienne d'Orves
F-75441 Paris Cedex 09(FR)

(54) Dispositif d'entraînement d'une pièce suivant des mouvements de rotation alternatifs, notamment une antenne de radar.

(57) Dispositif d'entraînement d'une pièce dans des mouvements de rotation alternatifs, comprenant un pignon (1) solidaire de la pièce à entrainer, une crémaillère (3) d'entraînement du pignon (1) et des vérins hydrauliques (4, 5) de commande de la crémaillère (3), laquelle est constituée d'un ensemble de maillons (8) articulés les uns aux autres et entourant le pignon (1) en engrenant avec ses dents (12). La crémaillère (3) entoure ainsi le pignon (1) et les vérins (4, 5) de commande sont entraînés dans un sens ou dans l'autre par une servovalve hydraulique (5). Cet actionneur, utilisable notamment pour commander en rotation une antenne de radar, présente un encombrement réduit par rapport aux actionneurs à crémaillères rectilignes.

FIG.1

Dispositif d'entraînement d'une pièce suivant des mouvements de rotation alternatifs, notamment une antenne de radar.-

---

La présente invention a pour objet un dispositif d'entraînement d'une pièce suivant des mouvements de rotation alternatifs, notamment une antenne de radar.

Les antennes de radar embarquées dans le nez d'avions de chasse sont disposées dans un carter de volume réduit, et doivent à l'intérieur de celui-ci être entraînées dans des mouvements de rotation alternés sur des angles inférieurs à 360°, afin de pouvoir balayer les zones les plus étendues possibles dans les trois dimensions, quelles que soient les trajectoires suivies par l'avion afin de détecter une cible éventuelle.

Pour entraîner en rotation de telles antennes de radar, on connaît deux types de dispositif : le premier type comporte un actionneur rotatif assurant l'entraînement de l'antenne au moyen de pignons ou d'embiellages, grâce à des moteurs électriques ou hydrauliques. Le second type de réalisation est constitué d'un actionneur linéaire entraîné, soit par une crémaillère actionnée par des vérins, soit par un embiellage si l'angle est faible.

Or, dans certains nez d'avions, la place disponible pour loger de tels types d'actionneurs est insuffisante dans toute ou partie des trois dimensions de l'espace.

L'invention a donc pour but de proposer un dispositif d'entraînement dont l'encombrement soit suffisamment réduit par rapport à celui des actionneurs précités, afin de pouvoir être logé dans des carters exigus tout en permettant l'actionnement de l'antenne sur des angles suffisants dans les trois dimensions.

Le dispositif d'entraînement visé par

l'invention comprend un pignon solidaire de la pièce à entraîner en rotation et en liaison de commande avec une crémaillère, ainsi que des moyens hydrauliques d'actionnement de la crémaillère.

Suivant l'invention, la crémaillère est articulée et enroulée autour du pignon avec la denture duquel elle est en prise.

Ainsi, la substitution d'une crémaillère articulée aux crémaillères rectilignes utilisées antérieurement permet de réduire considérablement l'encombrement de l'actionneur dans la direction perpendiculaire à l'axe de rotation du pignon et de l'antenne, puisque tout dépassement linéaire de la crémaillère au-delà du contour du pignon est supprimé.

Suivant un mode de réalisation de l'invention, la crémaillère est constituée d'un ensemble de maillons articulés les uns aux autres, chaque maillon étant pourvu d'une dent au moins et par exemple de deux, complémentaires des dents du pignon associé.

Selon une autre particularité importante de l'invention, le dispositif comprend une servovalve hydraulique de commande de deux vérins hydrauliques d'actionnement de la crémaillère, agencés de telle sorte que les vérins actionnent toujours la crémaillère en traction quel que soit le sens dans lequel le pignon est entraîné en rotation. La servovalve est formée, de manière connue en soi, d'un potentiomètre électromagnétique et d'un étage de distribution du fluide hydraulique aux vérins.

Le fait de commander la crémaillère toujours en traction quel que soit le sens de rotation du pignon, est rendu possible par la mise en oeuvre d'une servovalve hydraulique, et évite avantageusement un pliage de la crémaillère qui se produirait si celle-ci était commandée par poussée. Un tel pliage serait évidemment nuisible au bon fonctionnement de l'actionneur.

D'autres particularités et avantages de l'invention apparaitront au cours de la description qui va suivre, faite en référence aux dessins annexés qui en illustrent un mode de réalisation à titre d'exemple non limitatif :

- la Figure 1 est une vue en élévation d'une forme de réalisation du dispositif d'entrai-nement conforme à l'invention, montrant en particulier le circuit hydraulique de commande de la crémaillère;

- la Figure 2 est une vue de dessus en plan de deux maillons articulés de la crémaillère visible à la Figure 1.

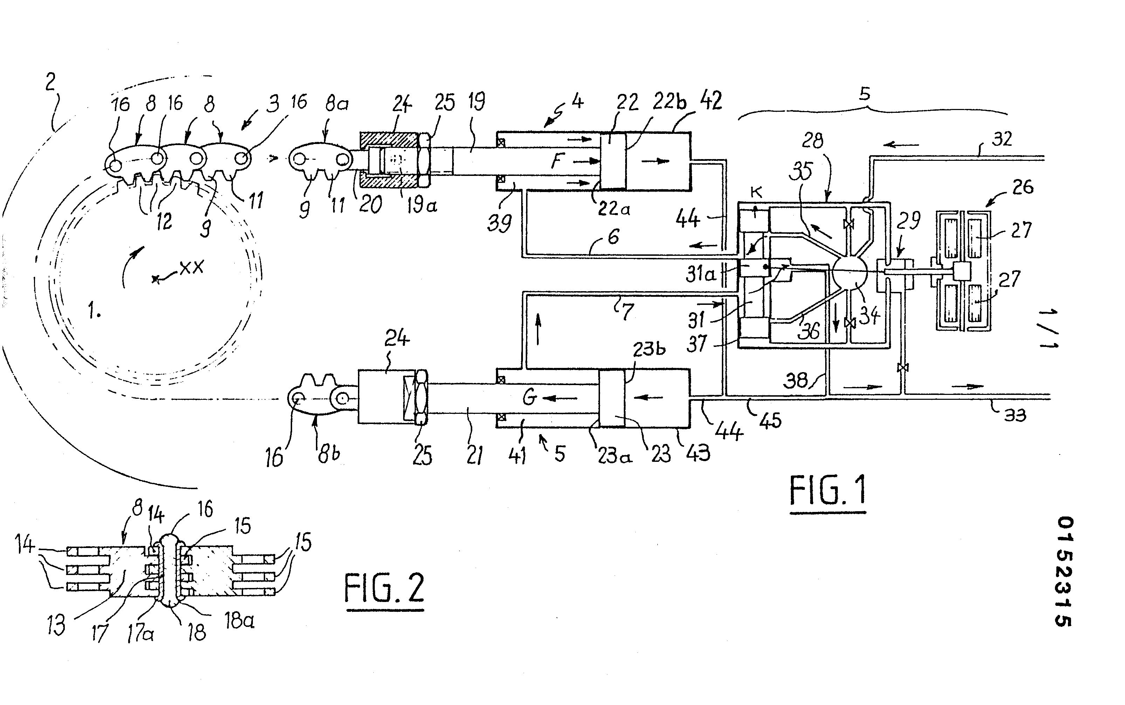

Le dispositif représenté schématiquement à la Figure 1 est destiné à entraîner en rotation sui-vant des déplacements alternés inférieurs à un tour une pièce non représentée, qui peut être en particulier mais non exclusivement une antenne de radar embarqué dans le nez d'un avion de chasse.

Cette pièce est solidaire en rotation d'un pignon 1 monté rotatif autour d'un axe X-X, et logé dans un carter 2, le volume disponible entre le pignon 1 et le carter 2 étant très réduit comme cela est le cas dans le nez d'un avion de chasse. Le dispositif d'entraînement du pignon 1 en rotation comprend une crémaillère articulée 3, enroulée autour du pignon 1 avec les dents 12 duquel elle est en prise, deux vérins hydrauliques 4, 5 d'actionnement de la crémaillère 3 suivant des mouvements alternatifs, une servovalve hydraulique 5 de commande des vérins 4, 5, auxquels elle est reliée par des canalisations d'alimentation 6, 7 respectivement.

La crémaillère 3 est constituée d'un ensemble de maillons 8 articulés les uns aux autres, chaque maillon étant pourvu d'au moins une dent mais de préférence de deux 9, 11, complémentaires des dents 12 du pignon 1. Chaque maillon 8 présente une certaine courbure correspondant au rayon du pignon 1, de manière à faciliter un bon engrènement entre ces dents 9, 11 et les dents 12.

D'autre part, comme on le voit à la Figure 2, chaque maillon 8 est formé d'un corps 13 et de languettes 14, 15 parallèles entre elles, qui font saillie du corps 13 sur les faces opposées de ce dernier, tournées vers les maillons 8 adjacents, les languettes 14, 15 étant venues de matière avec le corps 13. Dans l'exemple décrit, chaque maillon 8 comporte ainsi trois languettes 14 d'un côté, et trois languettes 15 du côté opposé, ces dernières étant décalées transversalement par rapport aux languettes 14 d'une distance égale à la largeur desdites languettes.

Ce décalage permet d'intercaler les languettes 15 d'un maillon 8 entre les languettes 14 correspondantes d'un des deux maillons 8 contigus, les languettes 14 de ce maillon 8 venant de leur côté se loger entre les languettes 15 du second maillon 8 adjacent. Chaque ensemble de languettes 14, 15 imbriquées les unes dans les autres est traversé par un axe d'articulation 16, constitué dans cet exemple d'un manchon tubulaire 17 dont les bords opposés sont sertis en 17a sur les languettes 14, 15, et d'une pièce cylindrique 18 intérieure au manchon 17, sur les extrémités duquel elle est également sertie en 18a (Figure 2).

Les maillons terminaux 8a, 8b de la crémaillère 3 sont respectivement fixés aux tiges 19, 21 des pistons 22, 23 des vérins hydrauliques 4, 5.

Dans l'exemple illustré à la Figure 1, cette fixation est assurée par un boitier 24 présentant un trou taraudé dans lequel est vissée de manière réglable l'extrémité filetée 19a de la tige 19 pour le vérin 4, avec réglage au moyen d'un écrou 25, tandis qu'une pièce 20 articulée sur le maillon terminal 8a est logée partiellement dans le boitier 24 à l'intérieur duquel elle est retenue.

La fixation du maillon 8b à la tige 21 du vérin 5 est réalisée de manière similaire.

La servovalve hydraulique 5 est constituée de deux étages dont le premier est un potentiomètre électromagnétique 26 muni de bobines 27, et le second est un étage 28 de distribution du fluide hydraulique aux vérins 4, 5 par les canalisations d'alimentation 6, 7. Le potentiomètre hydraulique 26 ainsi que l'étage de distribution 28 sont connus en soi et ne seront donc pas décrits en détail.

On indiquera seulement que le potentiomètre 26 comprend une buse-palette 29 (appelée également "jet-pipe") qui commande le déplacement dans un sens ou dans l'autre d'un tiroir 31 de l'étage distributeur 28, dont le positionnement détermine l'arrivée du fluide sous pression par la canalisation 6 dans le vérin 4 ou par la canalisation 7 dans le vérin 5. L'étage 28 est relié au réservoir de fluide hydraulique (non représenté) par une canalisation 32 d'amenée, et par une canalisation 33 de retour. La canalisation 32 débouche dans un compartiment 34 de l'étage 28, d'où partent deux conduits 35, 36 qui communiquent avec la chambre 37 contenant le tiroir 31 sensiblement en regard des portées terminales de ce dernier. La canalisation 33 est de son côté reliée par un conduit 38 à la partie centrale de la chambre 37, dans laquelle elle débouche en regard d'une portée circulaire 31a saillant du tiroir 31.

Les pistons 22, 23 présentent respectivement une face active 22a, 23a qui délimite dans chaque vérin 4, 5 une première chambre 39, 41 pouvant être alimentée alternativement en fluide sous pression par les canalisations correspondantes 6 et 7; les pistons 22, 23 comportent d'autre part une face non active 22b, 23b délimitant une seconde chambre 42, 43 de refoulement, ces deux chambres 42, 43 étant suivant une particularité de l'invention, interconnectées par une canalisation 44.

Enfin, cette canalisation 44 est elle-même reliée par une connexion 45 à la canalisation 33 de retour du fluide à la bâche.

La mise en oeuvre et les avantages du dispositif d'actionnement du pignon 1 qui vient d'être décrit sont les suivants.

Lorsque du fluide sous pression parvient à l'étage 28 par la canalisation 32, ce fluide remplit le compartiment 34 et les conduits 35, 36. L'opérateur donne au potentiomètre électromagnétique 26 un signal de commande qui est fonction du sens dans lequel il veut faire tourner le pignon 1 et l'antenne solidaire de ce dernier. Selon le signal donné au potentiomètre 26, la buse-palette 29 commande le déplacement du tiroir 31 dans un sens ou dans l'autre. Si, par exemple le tiroir 31 se déplace dans le sens de la flèche K, c'est-à-dire vers le haut en considérant la Figure 1, la portée terminale du tiroir 31 qui obturait l'entrée du conduit 35 libère celle-ci, de sorte que le fluide hydraulique pénètre dans la chambre 37, puis dans la canalisation 6. La portée centrale 31a empêche le fluide sous pression de passer dans la partie de la chambre 37 située de l'autre côté de la portée 31a par rapport à la canalisation 6, et dans laquelle débouche la canalisation 7. En même temps, la portée 31a dégage l'entrée du conduit 38, tandis que par contre la portée terminale du tiroir 31 située du côté de l'entrée de la canalisation 7 obture l'entrée du conduit 36.

Le fluide sous pression parvient dans la chambre 39 du vérin 4 en suivant le trajet indiqué par les flèches, et exerce sur la face active 22a du piston 22 une poussée F qui exerce une traction correspondante sur la crémaillère 3. Cette dernière est donc entraînée dans le sens de la flèche F, et ses deux parties situées de part et d'autre du pignon 1 sont sollicitées en traction uniquement. Le piston 22 progresse donc dans la chambre 42, et le fluide hydraulique est refoulé de celle-ci, d'une part dans la chambre 43 du vérin 5 par la canalisation 44 d'interconnexion, et dans la conduite 33 de retour par les canalisations 4 et 45.

D'autre part, le fluide hydraulique de la chambre 41 du vérin 5 est refoulé par le déplacement du piston 23 entraîné par la crémaillère 3 dans le sens de la flèche G, opposé au sens de déplacement du piston 22. Le fluide refoulé par la canalisation 7 pénètre ensuite dans la partie de la chambre 37 comprise entre la portée terminale du tiroir 31 qui obture la canalisation 36 et la portée centrale 31a. Cette dernière ayant précédemment libéré l'entrée du conduit 38, le fluide pénètre dans celui-ci et de là s'écoule dans la conduite de retour 33.

Si l'on donne au potentiomètre 26 un signal de commande opposé au précédent, le fluide sous pression pénètre dans la chambre 37 par la canalisation 36 tandis que la canalisation 35 est obturée par la portée terminale correspondante du tiroir 31. Le fluide sous pression passe ensuite dans la canalisation 7 et dans le vérin 5, et le piston 23 est poussé dans le sens opposé à celui de la flèche G, en exerçant une traction sur la crémaillère articulée 3. Le circuit du fluide hydraulique dans les vérins 4, 5 et les canalisations 6, 7 est l'inverse du précédent, et ce fluide retourne à la canalisation 33 par le conduit 38.

Comme déjà indiqué, le fait d'articuler la crémaillère 3 en la constituant de maillons engrenant avec la périphérie du pignon 1 diminue considérablement l'encombrement de l'actionneur dans la direction perpendiculaire à l'axe de rotation du pignon 1 et de l'antenne du radar.

Par ailleurs, l'agencement de cet actionneur et sa commande par la servovalve hydraulique 5 permettent de solliciter la crémaillère 3 constamment en traction quel que soit le sens de rotation du pignon 1, ce qui évite, comme déjà indiqué, les risques de pliage qu'entrainerait une sollicitation en poussée.

L'interconnexion des deux chambres de refoulement 42, 43 permet d'amortir les échanges de fluide hydraulique entre les vérins 4, 5, tandis que la liaison 45 entre la connexion 44 et la conduite de retour 33 présente l'avantage de prévenir une extension en poussée des vérins 4, 5 en cas de fuite d'étanchéité d'un de leurs pistons. En effet, si un défaut d'étanchéité apparait entre l'un des pistons 22, 23 et le corps du vérin, par exemple au niveau du piston 22 quand celui-ci exerce une traction sur la crémaillère 3, la pression hydraulique va tendre à s'égaliser de part et d'autre ce piston, et va donc croître dans la chambre de refoulement 42. Mais du fait que le conduit 45 relie cette chambre 42 à la conduite de retour 33 par la canalisation d'amortissement 44, ce surcroit de fluide sous pression va retourner à la bâche, de sorte que la pression hydraulique ne pourra augmenter dans la canalisation 44 et par conséquent dans la chambre de refoulement 43 du vérin 5. Dans ces conditions, la crémaillère 3 ne pourra pas être entrainée en poussée par le piston 23, et ne pourra donc pas échapper à l'engrènement sur le pignon 1.

L'invention n'est pas limitée au mode de réalisation décrit et peut comporter des variantes d'exécution. Ainsi, le nombre de dents de chaque maillon 8 peut varier, le nombre de dents maximum étant lié au "module", ce module étant défini comme le rapport du nombre de dents du pignon au diamètre primitif de celui-ci. Des maillons pourvus d'une seule dent peuvent être éventuellement utilisés, les résultats obtenus avec de tels maillons étant toutefois moins satisfaisants que ceux obtenus avec des maillons pourvus de deux dents ou davantage.

Les vérins hydrauliques peuvent être à une seule chambre, aucune interconnexion n'étant alors prévue.

REVENDICATIONS

1 - Dispositif d'entraînement d'une pièce suivant des mouvements de rotation alternatifs, notamment une antenne de radar embarqué, comprenant un pignon (1) solidaire de la pièce à entraîner en rotation et en liaison de commande avec une crémaillère (3), ainsi que des moyens hydrauliques d'actionnement de la crémaillère (3), caractérisé en ce que la crémaillère (3) est articulée et enroulée autour du pignon (1) avec la denture (12) duquel elle est en prise, et en ce qu'il comprend un servovalve hydraulique (5) de commande de deux vérins hydrauliques (4, 5) d'actionnement de la crémaillère ((3), agencés de telle sorte que les vérins (4, 5) actionnent toujours la crémaillère (3) en traction quel que soit le sens dans lequel le pignon (12) est entraîné en rotation, la servovalve (5) étant formé d'un potentiomètre électromagnétique (26) et d'un étage (28) de distribution du fluide hydraulique aux vérins (4, 5).

2 - Dispositif selon la revendication 1, caractérisé en ce que la crémaillère (3) est constituée d'un ensemble de maillons (8) articulés les uns aux autres, chaque maillon (8) étant pourvu d'une dent au moins et par exemple de deux (9, 11) complémentaires des dents (12) du pignon (1) associé.

3 - Dispositif selon la revendicaton 2, caractérisé en ce que chaque maillon (8) est formé d'un corps (13) et de languettes parallèles entre elles (14, 15), faisant saillie du corps (13) sur les faces opposées de ce dernier avec lequel elles sont venues de matière, et espacées entre elles de façon à pouvoir s'intercaler entre des languettes correspondantes (15, 14) des deux maillons (8) contigus audit maillon, les languettes de deux maillons consécutifs (8) étant traversées par un axe d'articulation (16).

4 - Dispositif selon la revendication 3, caractérisé en ce que l'axe d'articulation (16) est constitué d'un manchon tubulaire (17) dont les bords opposés (17a) sont sertis sur les languettes (14, 15) et d'une pièce (16) intérieure au manchon (17) sur les extrémités duquel elle est sertie.

5 - Dispositif selon la revendication 1, caractérisé en ce que chaque vérin (4, 5) comporte un piston (22, 23) dont la tige est rigidement reliée à une extrémité de la crémaillère articulée (3) et présente une face active (22a, 23a) qui délimite une première chambre (39, 41) susceptible d'être alimentée en fluide sous pression par la servovalve de commande (5), et une face non active (22b, 23b) délimitant une seconde chambre de refoulement (42, 43) et les deux secondes chambres (42, 43) sont interconnectées par une canalisation (44) permettant d'amortir les échanges de fluide entre les deux vérins (4, 5).

6 - Dispositif selon la revendication 5, caractérisé en ce que la canalisation d'amortissement (44) communique avec un conduit de retour (33) du fluide à la bâche par une liaison (45).

0152315

1/1

FIG.1

FIG.2

# 0152315
Numero de la demande

## RAPPORT DE RECHERCHE EUROPEENNE

Office européen
des brevets

EP 85 40 0064

### DOCUMENTS CONSIDERES COMME PERTINENTS

| Catégorie | Citation du document avec indication en cas de besoin des parties pertinentes | Revendication concernée | CLASSEMENT DE LA DEMANDE (Int Cl 4) |
|---|---|---|---|
| A | DE-A-1 750 935 (FISCHER) * Pages 3,4; figures * | 1,2,5 | F 16 H 19/00 F 15 B 15/06 H 01 Q 3/06 |
| A | FR-A-2 393 201 (LAITRAM) * En entier * | 1-3 | |
| A | US-A-1 670 278 (BELCHER) * Page 1; figures * | 2,4 | |
| A | FR-A-1 180 623 (ALBISWERKE) * En entier * | 1,5,6 | |
| A | DE-A-3 225 924 (PRÖSCH) | | |

DOMAINES TECHNIQUES RECHERCHES (Int Cl 4)

F 16 H 19/00
F 15 B 15/00
F 16 H 7/00
F 16 G 13/00
H 01 Q 3/00

Le present rapport de recherche a été établi pour toutes les revendications

| Lieu de la recherche LA HAYE | Date d'achèvement de la recherche 28-03-1985 | Examinateur FLORES E. |
|---|---|---|